# EUROPÄISCHE PATENTANMELDUNG

(11) **EP 4 166 972 A1**
(43) Veröffentlichungstag der Anmeldung: **19.04.2023**
(21) Anmeldenummer: 22200839.3
(22) Anmeldetag: 11.10.2022
(51) Int. Cl.: G01S 1/04, G01S 1/70, G01S 5/02, G01S 5/16, G01S 17/06, B65H 54/26, D01H 15/013, D01H 13/00, G01S 5/14, G01S 5/30

(54) **VERFAHREN UND SYSTEM ZUM POSITIONIEREN EINER VERFAHRBAREN WARTUNGSEINRICHTUNG AN EINER TEXTILMASCHINE**

(30) Priorität: 13.10.2021 DE 102021126548
(71) Anmelder: Maschinenfabrik Rieter AG, 8406 Winterthur (CH)
(72) Erfinder: Göhler, Holm, 85051 Ingolstadt (DE); Reinhardt, Günther, 85053 Ingolstadt (DE); Reuthlinger, Julian, 85049 Ingolstadt (DE); Tarnowski, Mayk, 88131 Lindau (DE); Schilling, Joachim, 85126 Münchsmünster (DE); Martin, Thomas, 85051 Ingolstadt (DE)
(74) Vertreter: Canzler & Bergmeier Patentanwälte Partnerschaft mbB

(57) **Zusammenfassung**

Bei einem Verfahren zum Positionieren einer verfahrbaren Wartungseinrichtung (5) an einer Textilmaschine (1), wobei die Textilmaschine (1) eine Vielzahl gleichartiger, nebeneinander angeordneter Arbeitsstellen (2) aufweist und wobei die Wartungseinrichtung (5) zur Bedienung und/oder Wartung der einzelnen Arbeitsstellen (2) entlang der Arbeitsstellen (2) verfahrbar ist, wird mittels wenigstens einer Sendeeinheit (S) wenigstens ein Signal ausgesendet, welches mittels wenigstens einer Empfangseinheit (E) empfangen wird. Es werden wenigstens zwei ortsfeste Bezugspunkte (12) an der Textilmaschine (1) und/oder in einer Umgebung der Textilmaschine (1) und wenigstens ein Messpunkt (13) an der verfahrbaren Wartungseinrichtung (5) festgelegt und Laufzeiten des wenigstens einen Signals zwischen dem Messpunkt (13) und den wenigstens zwei Bezugspunkten (12) werden gemessen. Mittels einer Auswerteeinheit (14) wird daraus die Position der Wartungseinrichtung (5) an der Textilmaschine (1) bestimmt. Bei einem entsprechenden System zum Positionieren einer verfahrbaren Wartungseinrichtung (5) an einer Textilmaschine (1) weist die Textilmaschine (1) wenigstens eine Steuereinheit (11) zum Positionieren der verfahrbaren Wartungseinrichtung (5) auf. Das System weist weiterhin eine Auswerteeinheit (14), wobei die Steuereinheit (11) zum Positionieren der Wartungseinrichtung (5) an der Textilmaschine (1) mit der Auswerteeinheit (14) verbunden ist.

## Beschreibung

Die vorliegende Erfindung betrifft ein Verfahren zum Positionieren einer verfahrbaren Wartungseinrichtung an einer Textilmaschine, wobei die Textilmaschine eine Vielzahl gleichartiger, nebeneinander angeordneter Arbeitsstellen aufweist und wobei die Wartungseinrichtung zur Bedienung und/oder Wartung der einzelnen Arbeitsstellen entlang der Arbeitsstellen verfahrbar ist. Bei dem Verfahren wird mittels wenigstens einer Sendeeinheit wenigstens ein Signal ausgesendet, welches mittels wenigstens einer Empfangseinheit empfangen wird. Weiterhin betrifft die Erfindung eine entsprechende Textilmaschine.

An Textilmaschinen mit einer Vielzahl gleichartiger, nebeneinander angeordneter Arbeitsstellen ist es regelmäßig erforderlich, verschiedene Wartungstätigkeiten an den einzelnen Arbeitsstellen vorzunehmen. Die Wartungstätigkeiten können beispielsweise das Auswechseln einer vollgelaufenen Spule gegen eine Leerhülse oder das Wiederverbinden eines Fadenendes nach einer Unterbrechung der Produktion, beispielsweise einem Fadenbruch oder einem Reinigerschnitt, umfassen. Ebenso kann es erforderlich sein, bestimmte Reinigungsarbeiten an der Arbeitsstelle vorzunehmen oder ein leer gelaufenes Vorlagematerial auszutauschen. Während diese Tätigkeiten an manuellen Maschinen durch einen Bediener ausgeführt werden müssen, ist an vollautomatischen und teilweise auch an halbautomatischen Maschinen hierzu eine verfahrbare Wartungseinrichtung vorgesehen. Auch an modernen Maschinen mit sogenannten autarken Arbeitsstellen, welche nach einer Unterbrechung der Produktion das Fadenende selbst wieder verbinden können, sind häufig noch Arbeiten durch verfahrbare Wartungseinrichtungen vorzunehmen.

Zur Durchführung der Wartungstätigkeiten weisen solche Wartungseinrichtungen meist mehrere Wartungsorgane auf, die in der Regel durch eine Steuereinheit der Wartungseinrichtung im Zusammenwirken mit einer Steuereinheit der Textilmaschine und/oder einer Steuereinheit der einzelnen Arbeitsstelle angesteuert werden, um die Wartungstätigkeiten zeitlich exakt auf die Abläufe an der Arbeitsstelle angepasst durchführen zu können. Weiterhin ist es erforderlich, die Wartungseinrichtung für die Durchführung der Wartungstätigkeiten möglichst exakt an der zu wartenden Arbeitsstelle zu positionieren.

Zum Positionieren einer verfahrbaren Wartungseinrichtung an der Textilmaschine und an den einzelnen Arbeitsstellen sind im Stand der Technik verschiedene Verfahren bekannt geworden. Beispielsweise wird in der DE 10 2004 035 261 A1 beschrieben, dass die Arbeitsstellen jeweils individuelle Arbeitsstellenkennungen ausstrahlen. Diese können durch die Wartungseinrichtung im Vorbeifahren erfasst werden. Die Wartungseinrichtung weist hierfür eine Datenübermittlungseinrichtung auf. Durch Erfassen der Arbeitsstellenkennungen und entsprechendes Addieren oder Subtrahieren der Anzahl der empfangenen Arbeitsstellenkennungen ausgehend von einer Grundstellung kann die Wartungseinrichtung ihre Position an der Textilmaschine und damit auch die Position der bedienbedürftigen Arbeitsstelle bestimmen.

Aus der DE 101 36 598 A1 ist ebenfalls ein Verfahren zum Positionieren einer Wartungseinrichtung an einer Textilmaschine beschrieben. Hierzu sind ein Emitter und ein Sensor an der Wartungseinrichtung vorgesehen und weiterhin ein mit diesen zusammenwirkender Reflektor an der Arbeitsstelle. Der Emitter ist beispielsweise als Laser ausgebildet, der einen gebündelten Laserstrahl zur Arbeitsstelle schickt. Der Laserstrahl wird vom Reflektor zurückgeworfen und von einem lichtempfindlichen Sensor erfasst. Durch Abzählen der erfassten Impulse beim Vorbeifahren ausgehend von einer Grundstellung kann die Wartungseinrichtung ihre Position an der Textilmaschine bestimmen und die gewünschten Arbeitsstellen anfahren. Zudem kann aufgrund des gebündelten Laserstrahls die Wartungseinrichtung sehr genau an der jeweiligen Arbeitsstelle feinpositioniert werden.

Aufgabe der vorliegenden Erfindung ist es, ein Verfahren zum Positionieren einer verfahrbaren Wartungseinrichtung an einer Textilmaschine sowie eine entsprechende Textilmaschine vorzuschlagen, das eine sehr genaue Positionierung der Wartungseinrichtung sowohl an der Textilmaschine als auch vor einer einzelnen Arbeitsstelle ermöglicht.

Die Aufgabe wird gelöst mit den Merkmalen der unabhängigen Ansprüche.

Bei einem Verfahren zum Positionieren einer verfahrbaren Wartungseinrichtung an einer Textilmaschine, wobei die Textilmaschine eine Vielzahl gleichartiger, nebeneinander angeordneter Arbeitsstellen aufweist, ist die Wartungseinrichtung zur Bedienung und/oder Wartung der einzelnen Arbeitsstellen entlang der Arbeitsstellen verfahrbar. Bei dem Verfahren wird mittels wenigstens einer Sendeeinheit wenigstens ein Signal ausgesendet, welches mittels wenigstens einer Empfangseinheit empfangen wird.

Es wird vorgeschlagen, dass wenigstens zwei ortsfeste Bezugspunkte an der Textilmaschine und wenigstens ein Messpunkt an der verfahrbaren Wartungseinrichtung festgelegt werden und dass Laufzeiten des wenigstens einen Signals zwischen dem Messpunkt und den wenigstens zwei Bezugspunkten gemessen werden. Mittels einer Auswerteeinheit wird aus den gemessenen Laufzeiten die Position der Wartungseinrichtung an der Textilmaschine bestimmt.

Nach einer alternativen Ausführung des Verfahrens ist es auch möglich, die wenigstens zwei ortsfesten Bezugspunkte nicht direkt an der Textilmaschine, sondern in einer Umgebung der Textilmaschine festzulegen. Beispielsweise können die ortsfesten Bezugspunkte auch in einem die Textilmaschine umgebenden Raum, beispielsweise einem Spinnsaal, oder an einer benachbarten Textilmaschine vorgesehen sein. Wesentlich ist dabei lediglich, dass zwei ortsfeste Bezugspunkte vorgesehen sind, um die Position des ortsveränderlichen Messpunktes und damit die Position der Wartungseinrichtung zu ermitteln.

Es wird weiterhin ein System zum Positionieren einer verfahrbaren Wartungseinrichtung an einer solchen Textilmaschine vorgeschlagen. Die Textilmaschine weist eine Steuereinheit zum Positionieren der verfahrbaren Wartungseinrichtung an der Textilmaschine auf. Das System beinhaltet wenigstens eine Sendeeinheit zum Aussenden eines Signals und wenigstens eine Empfangseinheit zum Empfangen des Signals. Weiterhin beinhaltet das System wenigstens zwei ortsfeste Bezugspunkte und wenigstens einen Messpunkt an der verfahrbaren Wartungseinrichtung, sowie eine Auswerteeinheit, mittels welcher zur Bestimmung der Position der Wartungseinrichtung an der Textilmaschine Laufzeiten des wenigstens einen Signals zwischen dem Messpunkt und den wenigstens zwei Bezugspunkten auswertbar sind. Die Steuereinheit ist zum Positionieren der Wartungseinrichtung an der Textilmaschine mit der Auswerteeinheit verbunden.

Bei dem System ist es vorteilhaft, wenn die wenigstens zwei ortsfesten Bezugspunkte an der Textilmaschine angeordnet sind. Die Positionierung der Wartungseinrichtung an der Textilmaschine kann somit an jeder Textilmaschine autark erfolgen. Grundsätzlich ist es jedoch ebenfalls möglich, die zwei ortsfesten Bezugspunkte in einer Umgebung der Textilmaschine, beispielsweise an einer benachbarten Maschine oder einer Decke oder Wand des Aufstellortes der Textilmaschine, anzuordnen.

Durch die Laufzeitmessung des Signals kann jeweils die Entfernung zwischen dem ortsfesten Bezugspunkt und dem auf der verfahrbaren Wartungseinrichtung angeordneten, ortsveränderlichen Messpunkt bestimmt werden.

Die wenigstens zwei ortsfesten Bezugspunkte und der ortsveränderliche Messpunkt spannen dabei ein Dreieck auf. Die Bezugspunkte und der Messpunkt stellen die Endpunkte der zu messenden Entfernung dar. Da zudem die Entfernung zwischen den beiden ortsfesten Bezugspunkten bekannt ist, kann somit aus den beiden Laufzeiten die gesuchte Lage des Messpunktes und damit die Position der Wartungseinrichtung berechnet werden.

Mittels des Verfahrens und des Systems kann die Position der Wartungseinrichtung sehr genau ermittelt werden, so dass das Verfahren sowohl zur Positionierung der Wartungseinrichtung an der Textilmaschine geeignet ist, also zu einer bestimmten Arbeitsstelle aus der Vielzahl von Arbeitsstellen verfahren werden kann und diese identifizieren kann, als auch zur Positionierung der Wartungseinrichtung gegenüber einer bestimmten Arbeitsstelle. Mittels des Verfahren wird somit die Fahrbewegung der Wartungseinrichtung gesteuert und die Wartungseinrichtung an der Textilmaschine positioniert. Eine Grundstellung oder Referenzstellung wie bei anderen Verfahren ist dabei nicht erforderlich. Ebenso sind Fehlpositionierungen durch Fehlzählungen von Arbeitsstellen ausgeschlossen.

Es wird im Rahmen dieser Anmeldung stets von wenigstens zwei Bezugspunkten und wenigstens einem Messpunkt gesprochen. Da die Wartungseinrichtung sich an der Textilmaschine lediglich linear bewegen kann, kann dies für eine exakte Positionsbestimmung bereits ausreichend sein. Es versteht sich jedoch, dass auch mehr als zwei Bezugspunkte vorgesehen sein können, womit die Genauigkeit der Positionsbestimmung erhöht werden kann. Ebenso kann für eine noch exaktere Positionierung der Wartungseinrichtung auch mehr als ein Messpunkt an derselben vorgesehen werden. Als praktikabel dürften sich innerhalb eines Systems wenigstens drei Bezugspunkte und ein Messpunkt erweisen.

Um die Laufzeiten des oder der Signale zwischen dem Messpunkt und den wenigstens zwei Bezugspunkten messen zu können, wird bei dem Verfahren bzw. ist bei dem System nach einer ersten Ausführung in jedem der Messpunkte und Bezugspunkte entweder eine Empfangseinheit oder eine Sendeeinheit angeordnet. Die Empfangseinheit und die Sendeeinheit sind somit jeweils an den Endpunkten der zu messenden Entfernungen positioniert, so dass die Entfernung in vorteilhafter Weise jeweils direkt gemessen werden kann.

Nach einer zweiten Ausführung des Verfahrens und des Systems ist es vorteilhaft, wenn die wenigstens eine Sendeeinheit und die wenigstens eine Empfangseinheit gemeinsam an einem der Bezugspunkte oder dem Messpunkt angeordnet sind. An dem jeweils anderen Endpunkt der zu messenden Entfernung ist in diesem Fall ein Reflektor angeordnet. Die Messung der Entfernung erfolgt somit durch die Messung der Laufzeit des reflektierten Signals. Diese Ausführung kann die Datenübertragung und damit den baulichen Aufwand des Systems vereinfachen.

Nach einer vorteilhaften Weiterbildung der ersten Ausführung des Verfahrens wird jeweils eine Sendeeinheit an jedem der Bezugspunkte angeordnet und die wenigstens eine Empfangseinheit an dem wenigstens einen Messpunkt an der verfahrbaren Wartungseinrichtung angeordnet. Bei dem System ist entsprechend jeweils eine Sendeeinheit an jedem der Bezugspunkte angeordnet und die wenigstens eine Empfangseinheit an dem wenigstens einen Messpunkt an der verfahrbaren Wartungseinrichtung. Die Empfangseinheit kann die Signale beider Sendeeinheiten empfangen. Eine solche Ausführung kann insbesondere vorteilhaft sein, wenn die Positionen mehrerer Wartungseinrichtungen ggf. auch mehrerer Maschinen zu bestimmen sind. Die Signale der Sendeeinheiten können von mehreren Empfangseinheiten empfangen werden, so dass keine separaten Sendeeinheiten je Wartungseinrichtung oder je Maschine erforderlich sind.

Vorteilhaft kann es jedoch auch sein, wenn wenigstens zwei Sendeeinheiten fest an der Textilmaschine angeordnet werden bzw. bei dem System wenigstens zwei Sendeeinheiten fest an der Textilmaschine angeordnet sind. Die Textilmaschine mit der oder den Wartungseinrichtungen sowie den Sende- und Empfangseinheiten bildet in diesem Fall ein eigenes System, das unabhängig von anderen Textilmaschinen oder einer Umgebung der Textilmaschine ist.

Nach einer anderen vorteilhaften Weiterbildung der ersten Ausführung wird bei dem Verfahren wenigstens eine Sendeeinheit an dem Messpunkt der Wartungseinrichtung angeordnet bzw. ist bei dem System wenigstens eine Sendeeinheit an dem Messpunkt der Wartungseinrichtung angeordnet. An den Bezugspunkten, die sich sowohl an der Textilmaschine als auch in der Umgebung der Textilmaschine befinden können, ist in diesem Fall jeweils eine Empfangseinheit angeordnet. Vorteilhaft bei dieser Ausführung ist es, dass lediglich eine Sendeeinheit je zu positionierender Wartungseinrichtung benötigt wird.

Bezüglich der Anordnung der Sendeeinheit(en) und der Empfangseinheit(en) an den Bezugspunkten und dem Messpunkt sind im Rahmen der Patentansprüche zahlreiche weitere Variationen denkbar. Dabei ist es möglich, dass eine Empfangseinheit die Signale mehrerer Sendeeinrichtungen empfängt. In diesem Fall wäre es denkbar, dass die einzelnen Sendeeinrichtungen verschiedene Frequenzen nutzen, so dass die Empfangseinheit die Signale den verschiedenen Sendeeinheiten zuordnen kann. Ebenso ist es natürlich aber auch möglich, dass mehrere Empfangseinheiten das Signal nur einer Sendeeinheit empfangen.

Auch ist es bei dem Verfahren vorteilhaft, wenn das wenigstens eine Signal permanent ausgesendet wird. Die Positionierung der Wartungseinrichtung kann hierdurch schnell und genau erfolgen. Möglich ist jedoch auch eine intermittierende, jedoch hochfrequente Abstrahlung des Signals.

Vorteilhaft ist es auch, wenn zumindest vor einer Erstinbetriebnahme der Textilmaschine die Positionen der ortsfesten Bezugspunkte und/oder wenigstens eines Referenzpunktes von der Auswerteeinheit angelernt werden. Die Genauigkeit der Positionserfassung kann hierdurch weiter verbessert werden. Ebenso kann dies der Kontrolle der Positionserfassung dienen.

Daneben ist es vorteilhaft, wenn die Wartungseinrichtung mittels der Messung der Laufzeiten des wenigstens einen Signals vor einer wartungsbedürftigen Arbeitsstelle feinpositioniert wird bzw. feinpositionierbar ist. Aufgrund der hohen Genauigkeit der Positionierung, die durch zusätzliche Bezugspunkte noch gesteigert werden kann, sind separate Einrichtungen für die Feinpositionierung nicht erforderlich.

Vorteilhaft ist es, wenn das Signal ein elektromagnetisches Signal ist. Denkbar ist die Nutzung von Radiowellen, Mikrowellen, Infrarot und dgl. Besonders vorteilhaft ist es dabei, wenn das Signal ein optisches Signal ist.

Nach einer anderen Ausführung ist es jedoch auch möglich, dass das Signal ein Schallsignal ist.

Weitere Vorteile der Erfindung sind in den nachfolgenden Ausführungsbeispielen beschrieben. Es zeigen:
- **Figur 1**: eine schematische Vorderansicht einer Textilmaschine als Übersichtsdarstellung,
- **Figur 2**: eine schematische Draufsicht auf eine Textilmaschinenanlage mit zwei Textilmaschinen,
- **Figur 3**: eine schematische Draufsicht auf eine Textilmaschine nach einer ersten Ausführung,
- **Figur 4**: eine schematische Draufsicht auf eine Textilmaschine nach einer zweiten Ausführung, sowie
- **Figur 5**: eine schematische Draufsicht auf eine Textilmaschine nach einer dritten Ausführung.

Bei der nachfolgenden Beschreibung der Figuren werden für identische oder vergleichbare Merkmale jeweils gleiche Bezugszeichen verwendet. Einige der Merkmale werden daher nur bei ihrer ersten Erwähnung bzw. nur einmal anhand einer geeigneten Figur erläutert. Sofern diese Merkmale in Verbindung mit den weiteren Figuren nicht nochmals gesondert erläutert werden, entspricht deren Ausgestaltung und/oder Wirkweise der Ausgestaltung und Wirkweise der identischen oder vergleichbaren, beschriebenen Merkmale. Aus Gründen der Übersichtlichkeit ist weiterhin bei mehreren identischen Merkmalen oder Bauteilen in einer Figur nur eines oder sind nur wenige dieser identischen Merkmale beschriftet.

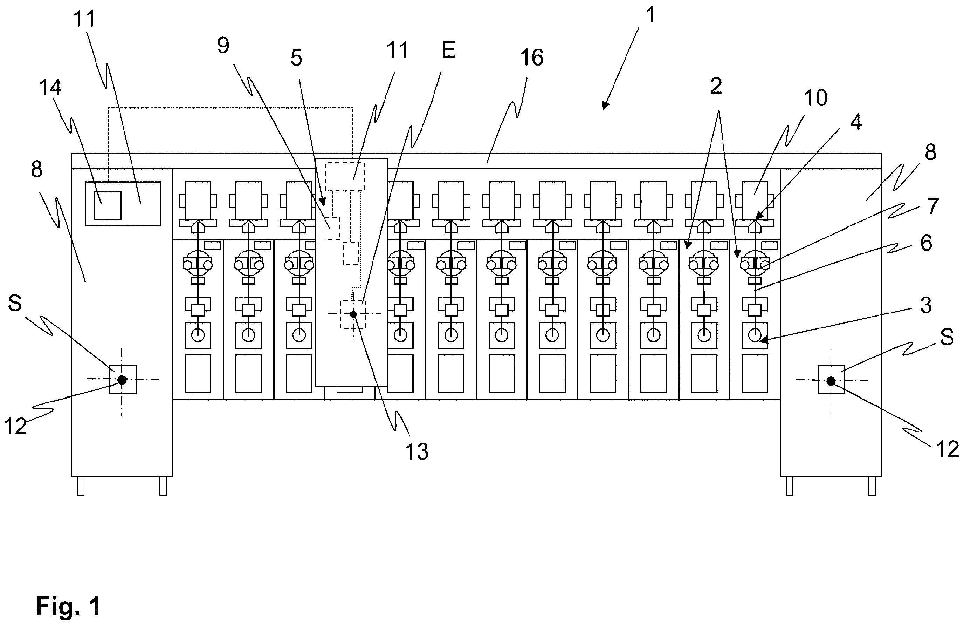

Figur 1 zeigt eine schematische Vorderansicht einer Textilmaschine 1. Die Textilmaschine 1 weist eine Vielzahl gleichartiger, nebeneinander angeordneter Arbeitsstellen 2 auf, die zwischen zwei Gestellen 8 angeordnet sind. Jede der Arbeitsstellen 2 weist eine Liefervorrichtung 3 zum Liefern eines Fadens 6 sowie eine Spulvorrichtung 4 zum Aufspulen des Fadens 6 auf eine Spule 10 auf. Die Liefervorrichtung 3 liefert während des Produktionsprozesses den Faden 6. Ist die Textilmaschine 1 als Spinnmaschine ausgebildet, so ist die Liefervorrichtung 3 eine Spinnvorrichtung, beispielsweise eine Rotorspinnvorrichtung, eine Ringspinnvorrichtung oder eine Luftspinnvorrichtung. Ist die Textilmaschine 1 als Spulmaschine ausgebildet, so ist die Liefervorrichtung eine Ablaufspule bzw. ein Spinnkops. Je nach Ausführung der Textilmaschine 1 können an den Arbeitsstellen 2 noch weitere Komponenten wie Arbeitsorgane und Handlingsorgane angeordnet sein. Beispielsweise ist in vorliegender Darstellung noch eine Paraffiniervorrichtung 7 an jeder der Arbeitsstellen 2 erkennbar.

Von Zeit zu Zeit sind an den Arbeitsstellen 2 verschiedene Wartungstätigkeiten durchzuführen. Diese umfassen beispielsweise das Auswechseln einer vollgelaufenen Spule 10 gegen eine Leerhülse, das Verbinden des Fadens 6 nach einer Unterbrechung der Produktion (Ansetzen oder Spleissen) sowie verschiedene Reinigungsarbeiten. Beispielsweise ist es bei einigen Spinnmaschinen erforderlich, regelmäßig das Spinnelement zu reinigen. Ebenso muss gelegentlich ein Vorlagematerial, beispielsweise ein zu verspinnendes Fasermaterial oder eine Ablaufspule, ausgewechselt werden. Hierfür weist die Textilmaschine 1 eine auf Schienen 16 entlang der Arbeitsstellen 2 verfahrbare Wartungseinrichtung 5 auf. Die Wartungseinrichtung 5 weist ein oder mehrere Wartungsorgane 9 auf, die die Wartungstätigkeiten an den Arbeitsstellen 2 vornehmen und deshalb sehr exakt gegenüber der jeweiligen Arbeitsstelle 2 und deren Arbeitsorganen und Handlingsorganen positioniert sein müssen.

Zur Steuerung der Funktionen der Textilmaschine 1 weist die Textilmaschine 1 eine zentrale Steuereinheit 11 auf, welche vorliegend in einem der Gestelle 8 angeordnet ist. Die Steuereinheit 11 kann mit Arbeitsstellensteuerungen (nicht gezeigt) der einzelnen Arbeitsstellen 2 zusammenwirken. Die Textilmaschine 1 kann zudem eine weitere Steuereinheit 11 aufweisen, welche in der Wartungseinrichtung 5 angeordnet ist und mit der zentralen Steuereinheit 11 in Verbindung steht. Die Steuereinheit 11 der Wartungseinrichtung steuert, ggf. im Zusammenwirken mit der zentralen Steuereinheit 11, die Fahrbewegung und die Wartungstätigkeiten der Wartungseinrichtung 5. Alternativ ist es auch möglich, dass dies direkt durch die zentrale Steuereinheit 11 der Textilmaschine 1 erfolgt.

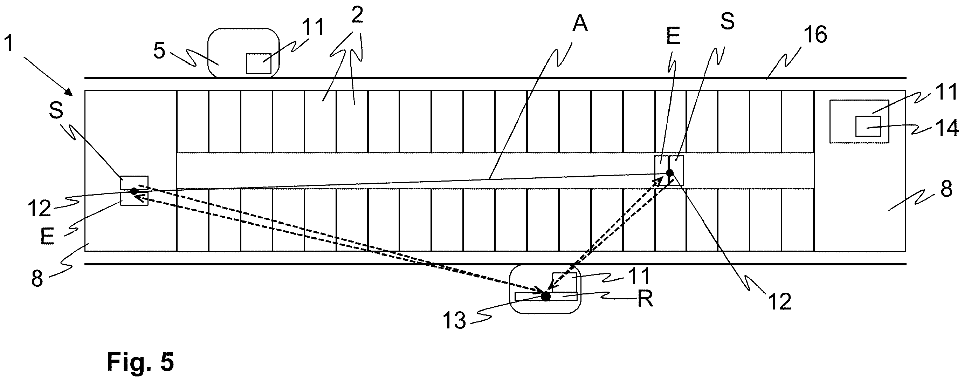

Die Positionierung der Wartungseinrichtung 5 an der Textilmaschine 1 erfolgt nun mit Hilfe wenigstens zweier ortsfester Bezugspunkte 12 und wenigstens eines an der verfahrbaren Wartungseinrichtung angeordneten Messpunktes 13, an denen jeweils entweder eine Sendeeinheit S oder eine Empfangseinheit E oder zumindest ein Reflektor R (s. Fig. 5) angeordnet ist. Damit ist es möglich, wenigstens ein Signal auszusenden und die Laufzeiten des Signals zwischen jeweils einem Bezugspunkt 12 und dem Messpunkt 13 zu messen. Diese sind wiederum ein Maß für die jeweiligen Entfernungen der Bezugspunkte 12 zu dem Messpunkt 13 und erlauben somit eine exakte Positionsbestimmung der Wartungseinrichtung.

Im vorliegenden Beispiel ist jeweils ein ortsfester Bezugspunkt 12 in den beiden Gestellen 8 vorgesehen. An den Bezugspunkten 12 ist jeweils eine Sendeeinheit S angeordnet. Weiterhin ist ein Messpunkt an der verfahrbaren Wartungseinrichtung 5 vorgesehen, an welchem eine Empfangseinheit E angeordnet ist.

Die von der Empfangseinheit E erfassten Laufzeiten werden einer vorliegend in der zentralen Steuereinheit 11 integrierten Auswerteeinheit 14 gemeldet, welche aus den Laufzeiten die Position des Messpunktes 13 bzw. der Wartungseinrichtung 5 bestimmt. Die Auswerteeinheit 14 liefert dann wiederum zur Steuerung der Fahrbewegung und zur Positionierung der Wartungseinrichtung 5 die Position der Wartungseinrichtung 5 an die zentrale Steuereinheit 11 und/oder an die Steuereinheit 11 der Wartungseinrichtung 5. Es versteht sich, dass die Auswerteeinheit 14 auch direkt an der Wartungseinrichtung 5, beispielsweise in deren Steuereinheit 11 oder auch direkt an der Empfangseinheit E vorgesehen sein könnte.

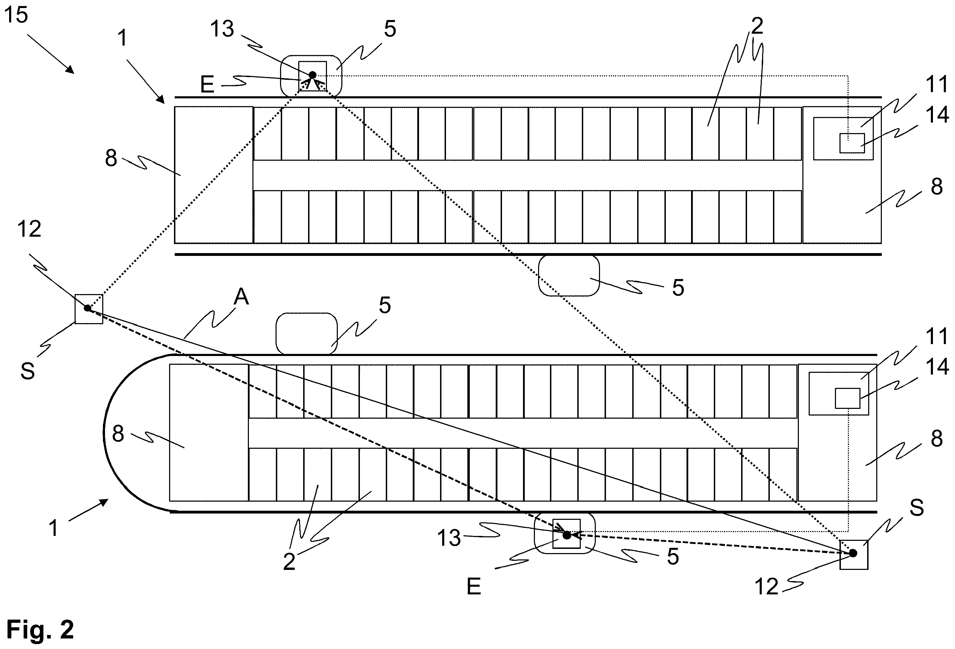

Figur 2 zeigt eine Draufsicht auf eine Textilmaschinenanlage 15 mit zwei Textilmaschinen 1. Es versteht sich, dass in einer realen Textilmaschinenanlage 15 in der Regel mehr als 2 Textilmaschinen 1 vorhanden sind. Wie ersichtlich weist jede der Textilmaschinen 1 vorliegend jeweils zwei Wartungseinrichtungen 5 auf. Natürlich können auch mehr oder weniger Wartungseinrichtungen 5 an jeder Textilmaschine 1 angeordnet sein. Dabei ist es möglich, dass die Wartungseinrichtungen 5 jeweils fest einer der beiden Längsseiten der Textilmaschine 1 zugeordnet sind (obere Darstellung) oder die Wartungseinrichtung 5 kann über einen Rundbogen der Schiene 16 von einer Längsseite der Textilmaschine 1 auf die andere wechseln (untere Darstellung).

Im vorliegenden Beispiel sind zwei (für eine genauere Ermittlung der Position der Wartungseinrichtungen 5 könnten natürlich auch mehr sein) feste Bezugspunkte 12 nicht an den Textilmaschinen 1 vorgesehen, sondern diese sind in der Umgebung der Textilmaschinen 1 angeordnet. Beispielsweise könnten die Bezugspunkte 12 an einer Decke eines Maschinensaals vorgesehen sein. Die Bezugspunkte 12 dienen vorliegend als Bezugspunkte 12 für mehrere Wartungseinrichtungen 5 mehrerer Textilmaschinen 1. An den Bezugspunkten 12 ist vorliegend jeweils eine Sendeeinheit S angeordnet. Zum Empfang der Signale der Sendeeinheiten S weist vorliegend jede der Wartungseinrichtungen 5 eine Empfangseinheit E auf. Die Empfangseinheit E ist in einem definierten Messpunkt 13 angeordnet, der sich an der verfahrbaren Wartungseinrichtung 5 befindet. Jede Empfangseinheit E kann nun die Signale der beiden bzw. aller Sendeeinheiten S empfangen, woraus durch Messung der Signallaufzeit ihre Entfernung zu der jeweiligen Sendeeinheit S ermittelt werden kann. Das Senden bzw. der Empfang der Signale ist vorliegend durch gestrichelte bzw. gepunktete Pfeile symbolisiert. Ebenso ist der bekannte Abstand A zwischen den beiden ortsfesten Bezugspunkten 12 markiert. Die Empfangseinheiten E stehen wiederum mit der auch in diesem Beispiel in der Steuereinheit 11 angeordneten Auswerteeinheit 14 ihrer Textilmaschine 1 in Verbindung, wie durch eine gepunktete Linie symbolisiert. Die Auswerteeinheit 14 kann somit aus den Laufzeitmessungen und den dazugehörigen Entfernungen wiederum die Position der Wartungseinrichtung 5 an der Textilmaschine 1 ermitteln. Die Steuereinheit 11 kann wiederum, ggf. im Zusammenwirken mit einer hier nicht dargestellten Steuereinheit 11 der Wartungseinrichtung 5, die Daten zur jeweils aktuellen Position der Wartungseinrichtung 5 zur Positionierung der Wartungseinrichtung 5 an der Textilmaschine 1 nutzen.

Der Wartungseinrichtung 5 ist es damit möglich, sich beispielsweise auf Anforderung zu einer bestimmten Arbeitsstelle 2 zu begeben und diese eindeutig zu identifizieren. Hierfür kann es ggf. bei Inbetriebnahme der Textilmaschine 1 erforderlich sein, die Positionen der Arbeitsstellen 2 bzgl. der Bezugspunkte 12 anzulernen und/oder die Positionen der Arbeitsstellen 2 in die Steuereinheit 11 zu programmieren.

Da die Positionsbestimmung auf diese Weise sehr genau erfolgen kann, ist es jedoch auch möglich, die Wartungseinrichtung 5 nicht nur zu einer bestimmten Arbeitsstelle 2 zu verfahren, sondern diese auch korrekt gegenüber der Arbeitsstelle 2 zu positionieren. Dies bedeutet, dass die Wartungsorgane 16 der Wartungseinrichtung 5 korrekt gegenüber den zu wartenden Komponenten wie Arbeitsorganen und Handlingsorganen der Arbeitsstelle 2 positioniert sind und mit diesen interagieren können. Die jeweils untere Wartungseinrichtung 5 jeder der beiden Textilmaschinen 1 der vorliegenden Darstellung ist dabei in einer Position dargestellt, in der sie vor einer bestimmten Arbeitsstelle 2 positioniert ist. Die obere Wartungseinrichtung 5 ist hingegen in einer Position zwischen jeweils zwei Arbeitsstellen 2 gezeigt.

Abweichend von der gezeigten Darstellung wäre es in diesem Beispiel auch möglich, eine Sendeeinheit S an den Messpunkten 13 der Wartungseinrichtungen 5 anzuordnen. An den Bezugspunkten 12 wäre in diesem Fall jeweils eine Empfangseinheit E angeordnet, die die Signale der Sendeeinheiten S der verschiedenen Wartungseinrichtungen 5 erfasst. Um Fehlzuordnungen zu vermeiden, könnten die Signale zu unterschiedlichen Zeiten ausgesendet bzw. empfangen werden oder es könnten unterschiedliche Frequenzen eingesetzt werden. Ebenso wäre es denkbar, mehrere Empfangseinheiten E vorzusehen, die den einzelnen Sendeeinheiten S jeweils zugeordnet werden.

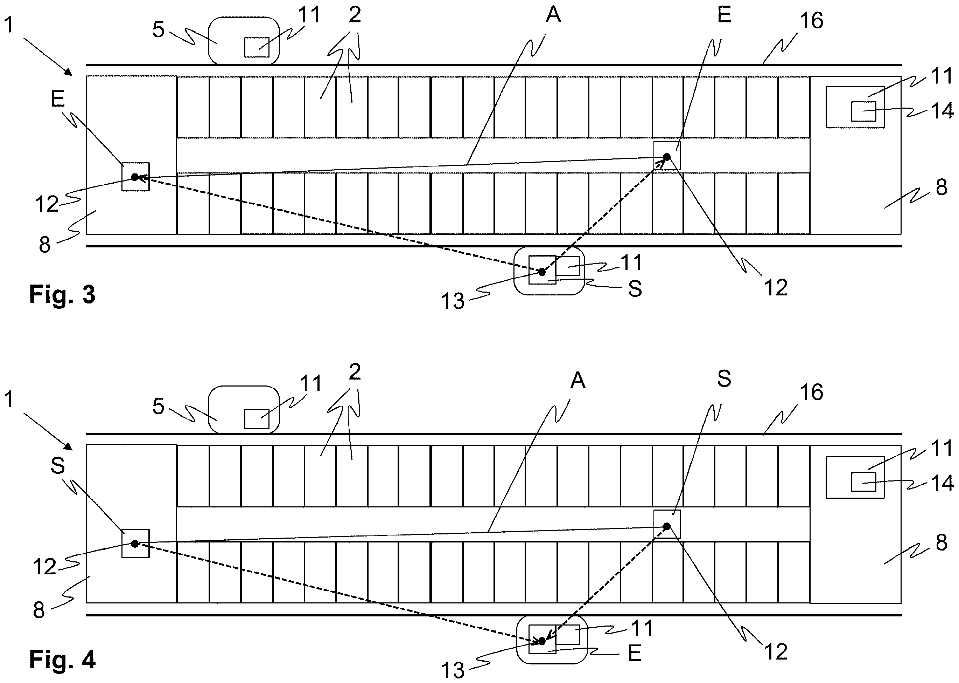

Figur 3 zeigt demgegenüber eine Ausführung, bei der die Bezugspunkte 12 ortsfest direkt an der Textilmaschine 1 angeordnet sind und die Textilmaschine 1 die Position ihrer Wartungseinrichtung(-en) 5 autark bestimmen kann. Dabei ist in jedem der Bezugspunkte 12 eine Empfangseinheit E angeordnet und eine Sendeeinheit S in jeder der Wartungseinrichtungen 5 an dem Messpunkt 13. Aus Gründen der Vereinfachung ist die Sendeeinheit S jedoch lediglich an der unteren Wartungseinrichtung 5 dargestellt. Die Empfangseinheiten E können wiederum das Signal der Sendeeinheit S empfangen und, ggf. in Verbindung mit der Auswerteeinheit 14, die Laufzeit des Signals messen. Das Signal ist wiederum mit gestrichelten Linien dargestellt. Die obigen Ausführungen zur Unterscheidbarkeit der Signale beim Empfang von Signalen mehrerer Sendeeinheiten S gelten hier analog.

Figur 4 zeigt eine gegenüber der Figur 3 umgekehrte Ausführung. Ebenso wie bei der Figur 3 sind auch hier die Bezugspunkte 12 ortsfest direkt an der Textilmaschine 1 angeordnet, so dass die Textilmaschine 1 die Position ihrer Wartungseinrichtung(-en) 5 autark bestimmen kann. Dabei ist in jedem der Bezugspunkte 12 eine Sendeeinheit S angeordnet, während die Empfangseinheit E an dem Messpunkt 13 der verfahrbaren Wartungseinrichtung 5 vorgesehen ist. Auch hier ist die Empfangseinheit E lediglich an der im Bild unteren Wartungseinrichtung 5 dargestellt, sie ist jedoch in analoger Weise auch an der oberen Wartungseinrichtung 5 vorhanden. Auch bei dieser Ausführung werden u.U. mehrere Signale von einer Empfangseinheit E empfangen. Die obigen Ausführungen von Figur 2 bzgl. der Unterscheidbarkeit der Signale gelten somit auch hier.

Bei den bisher gezeigten Figuren waren jeweils eine Sendeeinheit S und jeweils eine Empfangseinheit E an den Enden der zu messenden Entfernung angeordnet. Die zu messende Entfernung ist dabei jeweils durch einen der ortsfesten Bezugspunkte 12 und den ortsveränderlichen Messpunkt 13 definiert. Die Messung der Laufzeit erfordert dabei eine exakte zeitliche Synchronisation zwischen Sendeeinheit S und Empfangseinheit E. Es kann daher vorteilhaft sein, die Sendeeinheit S und Empfangseinheit E direkt nebeneinander anzuordnen und/oder in einem Bauteil zu vereinen.

Figur 5 zeigt eine solche Ausführung. Dabei sind in den ortsfesten Bezugspunkten 12 jeweils eine Sendeeinheit S und eine Empfangseinheit E direkt nebeneinander angeordnet. An dem Messpunkt 13 der Wartungseinrichtung 5 ist in diesem Fall wenigstens ein Reflektor R vorgesehen. Jede Empfangseinheit E kann somit das von der benachbarten Sendeeinheit S ausgesandte Signal empfangen, was ebenfalls durch gestrichelte Pfeile symbolisiert ist. Bezüglich der Messung der Laufzeiten, der Ermittlung der Entfernungen und der Position der Wartungseinrichtungen 5 sowie der Ansteuerung und Positionierung der Wartungseinrichtungen gelten die Ausführungen zu den vorhergehenden Figuren in analoger Weise.

Die Erfindung ist nicht auf die dargestellten Ausführungsbeispiele beschränkt. Wie bereits erwähnt sind hinsichtlich der Anzahl der Bezugspunkte 12 Abwandlungen möglich, wobei in der Regel mit mehr Bezugspunkten 12 eine genauere Positionsermittlung möglich ist. Selbiges gilt für die Anzahl der Sendeeinheiten S und der Empfangseinheiten E sowie deren Anordnung an den Bezugspunkten 12 und den Messpunkten 13. Die Anordnung und Anzahl der Sendeeinheiten S und der Empfangseinheiten E hängt u.a. von der Art und den Eigenschaften des verwendeten Signals, den räumlichen Gegebenheiten, der Anzahl der Wartungseinrichtungen 5 und der Anzahl der Textilmaschinen 1 ab. Weitere Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Textilmaschine
- 2: Arbeitsstelle
- 3: Liefervorrichtung
- 4: Spulvorrichtung
- 5: Wartungseinrichtung
- 6: Faden
- 7: Paraffiniervorrichtung
- 8: Gestell
- 9: Wartungsorgan
- 10: Spule
- 11: Steuereinheit
- 12: Bezugspunkt
- 13: Messpunkt
- 14: Auswerteeinheit
- 15: Textilmaschinenanlage
- 16: Schiene

- S: Sendeeinheit
- E: Empfangseinheit
- R: Reflektor
- A: Abstand

## Patentansprüche

1. Verfahren zum Positionieren einer verfahrbaren Wartungseinrichtung (5) an einer Textilmaschine (1), wobei die Textilmaschine (1) eine Vielzahl gleichartiger, nebeneinander angeordneter Arbeitsstellen (2) aufweist und wobei die Wartungseinrichtung (5) zur Bedienung und/oder Wartung der einzelnen Arbeitsstellen (2) entlang der Arbeitsstellen (2) verfahrbar ist, wobei bei dem Verfahren mittels wenigstens einer Sendeeinheit (S) wenigstens ein Signal ausgesendet wird, welches mittels wenigstens einer Empfangseinheit (E) empfangen wird, **dadurch gekennzeichnet, dass** wenigstens zwei ortsfeste Bezugspunkte (12) an der Textilmaschine (1) und/oder in einer Umgebung der Textilmaschine (1) und wenigstens ein Messpunkt (13) an der verfahrbaren Wartungseinrichtung (5) festgelegt werden und dass Laufzeiten des wenigstens einen Signals zwischen dem Messpunkt (13) und den wenigstens zwei Bezugspunkten (12) gemessen werden und mittels einer Auswerteeinheit (14) daraus die Position der Wartungseinrichtung (5) an der Textilmaschine (1) bestimmt wird.

2. Verfahren nach dem vorherigen Anspruch, **dadurch gekennzeichnet, dass** jeweils eine Sendeeinheit (S) an jedem der Bezugspunkte (12) angeordnet wird und die wenigstens eine Empfangseinheit (E) an dem wenigstens einen Messpunkt (13) an der verfahrbaren Wartungseinrichtung (5) angeordnet wird.

3. Verfahren nach einem der vorherigen Ansprüche, **dadurch gekennzeichnet, dass** wenigstens zwei Sendeeinheiten (S) fest an der Textilmaschine (1) angeordnet werden.

4. Verfahren nach Anspruch 1, **dadurch gekennzeichnet, dass** wenigstens eine Sendeeinheit (S) an dem Messpunkt (13) der Wartungseinrichtung (5) angeordnet wird.

5. Verfahren nach einem der vorherigen Ansprüche, **dadurch gekennzeichnet, dass** das wenigstens eine Signal permanent ausgesendet wird.

6. Verfahren nach einem der vorherigen Ansprüche, **dadurch gekennzeichnet, dass** zumindest vor einer Erstinbetriebnahme der Textilmaschine (1) die Positionen der ortsfesten Bezugspunkte (12) und/oder wenigstens eines Referenzpunktes von der Auswerteeinheit (14) angelernt werden.

7. System zum Positionieren einer verfahrbaren Wartungseinrichtung (5) an einer Textilmaschine (1), mit einer Textilmaschine (1) aufweisend eine Vielzahl gleichartiger, nebeneinander angeordneter Arbeitsstellen (2), eine entlang der Arbeitsstellen (2) verfahrbare Wartungseinrichtung (5) zur Bedienung und/oder Wartung der einzelnen Arbeitsstellen (2) sowie wenigstens eine Steuereinheit (11) zum Positionieren der verfahrbaren Wartungseinrichtung (5) an der Textilmaschine (1), mit wenigstens einer Sendeeinheit (S) zum Aussenden eines Signals und mit wenigstens einer Empfangseinheit (E) zum Empfangen des Signals, **dadurch gekennzeichnet, dass** das System wenigstens zwei ortsfeste Bezugspunkte (12) und wenigstens einen Messpunkt (13) an der verfahrbaren Wartungseinrichtung (5) beinhaltet, dass das System weiterhin eine Auswerteeinheit (14) aufweist, mittels welcher zur Bestimmung der Position der Wartungseinrichtung (5) an der Textilmaschine (1) Laufzeiten des wenigstens einen Signals zwischen dem Messpunkt (13) und den wenigstens zwei Bezugspunkten (12) auswertbar sind und dass die Steuereinheit (11) zum Positionieren der Wartungseinrichtung (5) an der Textilmaschine (1) mit der Auswerteeinheit (14) verbunden ist.

8. System nach dem vorhergehenden Anspruch, **dadurch gekennzeichnet, dass** die wenigstens zwei ortsfesten Bezugspunkte (12) an der Textilmaschine (1) angeordnet sind.

9. System nach einem der vorhergehenden Vorrichtungsansprüche, **dadurch gekennzeichnet, dass** jeweils eine Sendeeinheit (S) an jedem der Bezugspunkte (12) angeordnet ist und dass die wenigstens eine Empfangseinheit (E) an dem wenigstens einen Messpunkt (13) an der verfahrbaren Wartungseinrichtung (5) angeordnet ist.

10. System nach einem der vorhergehenden Vorrichtungsansprüche, **dadurch gekennzeichnet, dass** wenigstens zwei Sendeeinheiten (S) fest an der Textilmaschine (1) angeordnet sind.

11. System nach einem der Ansprüche 7 - 9, **dadurch gekennzeichnet, dass** wenigstens eine Sendeeinheit (S) an dem Messpunkt (13) der Wartungseinrichtung (5) angeordnet ist.

12. System nach einem der einem der vorhergehenden Vorrichtungsansprüche, **dadurch gekennzeichnet, dass** die wenigstens eine Sendeeinheit (S) und die wenigstens eine Empfangseinheit (E) gemeinsam an einem der Bezugspunkte (12) oder dem Messpunkt (13) angeordnet sind.

13. System nach einem der vorhergehenden Vorrichtungsansprüche, **dadurch gekennzeichnet, dass** die Wartungseinrichtung (5) mittels der Messung der Laufzeiten des wenigstens einen Signals vor einer wartungsbedürftigen Arbeitsstelle (2) feinpositionierbar ist.

14. System nach einem der vorhergehenden Vorrichtungsansprüche, **dadurch gekennzeichnet, dass** das Signal ein elektromagnetisches-Signal, insbesondereein optisches Signal, ist.

15. System nach einem der vorhergehenden Vorrichtungsansprüche, **dadurch gekennzeichnet, dass** das Signal ein Schallsignal ist.
